# EUROPEAN PATENT APPLICATION

(11) **EP 4 651 371 A1**
(43) Date of publication of application: **19.11.2025**
(21) Application number: 24840119.2
(22) Date of filing: 11.07.2024
(51) Int. Cl.: H02S 50/10, H02S 40/32

(54) **MODULE LEVEL POWER ELECTRONICS, DIAGNOSIS MANAGEMENT SYSTEM, AND DIAGNOSIS MANAGEMENT METHOD**

(30) Priority: 12.07.2023 KR 20230090458
(71) Applicant: Hanwha Solutions Corporation, Jung-gu Seoul 04541 (KR)
(72) Inventor: BAE, Jong Woo, Seoul 04541 (KR); LEE, Seonghun, Seoul 04541 (KR); HA, Seonghoon, Seoul 04541 (KR); SONG, JongWon, Seoul 04541 (KR); YUN, Ju Hwan, Seoul 04541 (KR)
(74) Representative: Mooser, Sebastian Thomas
(86) International application number: PCT/KR2024/009971
(87) International publication number: WO 2025/014309

(57) **Abstract**

A module level power electronics (MLPE) according to an aspect may comprise a processor that: executes a self-diagnosis mode on the basis of a self-diagnosis request signal received during operation or stop of an inverter connected to the module level power electronics; detects, ion the self-diagnosis mode, whether there is an installation error between a photovoltaic module and the module level power electronics or a component error within the module level power electronics; and transmits, to a diagnosis management system, diagnosis result information regarding whether or not the installation error and the component error are detected.

## Description

### Technical Field

The present invention relates to a module-level power electronics (MLPE), a validation management system, and a validation management method.

### Background Art

Recently, photovoltaic power generation systems have begun adopting module-level power electronics (MLPE)s (or module-level power control devices) to increase power generation under certain conditions, such as when shading occurs on photovoltaic modules.

Meanwhile, MLPE may experience faults, such as faults occurring during the process of connecting to a photovoltaic module or inverter (i.e., installation faults), or faults in components mounted within the MLPE itself (i.e., component faults).

Typically, MLPEs do not have a dedicated fault validation mode, but instead adopt a method in which anomalies detected during the operation of the MLPEs are notified to a user. In this case, failures can only be detected when the MLPE is installed on the photovoltaic module, connected to the inverter, and capable of performing actual power generation. Accordingly, there is a disadvantage in that a certain amount of time must pass before a failure can be detected. In addition, since faults cannot be validated at the user's desired timing, it is difficult to determine whether there is an installation fault or a component fault immediately after installation of a MLPE.

### Disclosure of Invention

### Technical Problem

The technical problem of the present invention is to provide a module-level power electronics (MLPE), a validation management system, and a validation management method.

### Solution to Problem

A module-level power electronics (MLPE) according to one aspect may include a processor configured to execute a self-validation mode on the basis of a self-validation request signal received during operation or stop of an inverter connected to the MLPE, detect, in the self-validation mode, whether there is an installation fault between the photovoltaic module and the MLPE or a component fault within the MLPE, and transmit, to a validation management system, validation result information regarding whether or not the installation fault and the component fault are detected.

A validation management system communicating with an MLPE according to another aspect may include a processor configured to transmit a self-validation request signal to the MLPE based on receiving a user input requesting self-validation, receive validation result information regarding an installation fault between a photovoltaic module and the MLPE or a component fault within the MLPE in response to the self-validation request signal, and perform a preset response operation on the basis of the validation result information.

A validation management method performed by an MLPE according to yet another aspect may include: executing a self-validation mode on the basis of a self-validation request signal received during operation or stop of an inverter connected to the MLPE, detecting, in the self-validation mode, whether there is an installation fault between the photovoltaic module and the MLPE or a component fault within the MLPE; and transmitting, to a validation management system, validation result information regarding whether or not the installation fault and the component fault are detected.

### Brief Description of Drawings

FIG. 1 is a schematic diagram illustrating a photovoltaic module including a module-level power electronics (MLPE) and a validation management system according to an embodiment.
FIGS. 2A and 2B are schematic diagrams illustrating a photovoltaic power generation system according to an embodiment.
FIG. 3 is a diagram illustrating a connection structure of a photovoltaic module and an MLPE according to an embodiment.
FIG. 4 is an operation flowchart of an MLPE according to an embodiment.
FIG. 5 is an operation flowchart of an MLPE and a validation management system according to a first embodiment.
FIG. 6 is an operation flowchart of an MLPE and a validation management system according to a second embodiment.
FIG. 7 is a diagram for describing the operation of a photovoltaic power generation system according to the first embodiment.
FIG. 8 is a diagram for describing the operation of a photovoltaic power generation system according to the second embodiment.
FIG. 9 is a diagram for describing the operation of a photovoltaic power generation system according to a third embodiment.
FIG. 10 is a diagram for describing the operation of a photovoltaic power generation system according to a fourth embodiment.
FIG. 11 is a diagram for describing the operation of a photovoltaic power generation system according to a fifth embodiment.
FIG. 12 is a diagram illustrating an operational flowchart between an MLPE and a validation management system according to an embodiment.
FIG. 13 is a diagram illustrating a waveform corresponding to fault detection according to the first embodiment.
FIG. 14 is a diagram illustrating a waveform corresponding to fault detection according to the second embodiment.
FIG. 15 is a diagram illustrating a waveform corresponding to fault detection according to the third embodiment.
FIG. 16 is a drawing illustrating a power supply structure of a building on which photovoltaic modules are installed according to an embodiment.

### Best mode for Carrying out the Invention

A module-level power electronics (MLPE) according to one aspect may include a processor configured to execute a self-validation mode on the basis of a self-validation request signal received during operation or stop of an inverter connected to the MLPE, detect, in the self-validation mode, whether there is an installation fault between the photovoltaic module and the MLPE or a component fault within the MLPE, and transmit, to a validation management system, validation result information regarding whether or not the installation fault and the component fault are detected.

### Mode for the Invention

Terminologies used herein are selected as commonly used by those of ordinary skill in the art in consideration of functions of the current embodiment, but may vary according to the technical intention, precedents, or a disclosure of a new technology. Also, in particular cases, some terms are arbitrarily selected by the applicant, and in this case, the meanings of the terms will be described in detail at corresponding parts of the specification. Accordingly, the terms used in the specification should be defined not by simply the names of the terms but based on the meaning and contents of the whole specification.

It should be understood that, when a part "comprises" or "includes" an element in the specification, unless otherwise defined, it is not excluding other elements but may further include other elements.

Additionally, terms coming with ordinal numbers, such as "first" or "second," used in the specification may be used to describe various components or embodiments, but the components or embodiments should not be limited by the terms. The above terms may be used to distinguish one component or embodiment from another component or embodiment.

Hereinafter, preferred embodiments of the present invention will be described in detail with reference to the accompanying drawings. The detailed description set forth below in connection with the appended drawings is intended as a description of exemplary embodiments of the present invention and is not intended to represent the only embodiments in which the present invention can be practiced. In the drawings, portions not related to the description may be omitted for clarity in explaining the present invention, and the same reference numerals may be used throughout the specification to denote the same or similar elements.

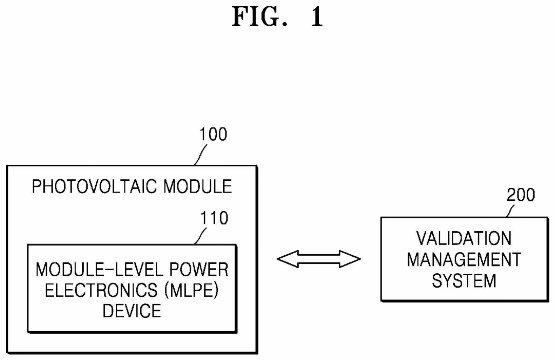

FIG. 1 is a schematic diagram illustrating a photovoltaic module including a module-level power electronics (MLPE) and a validation management system according to an embodiment.

FIG. 1 illustrates a photovoltaic module 100, an MLPE 110 included in the photovoltaic module 100, and a validation management system 200.

The photovoltaic module 100 may be a module that produces power using sunlight. For example, a photovoltaic module 100 may include a plurality of photovoltaic cells. Photovoltaic cells may generate power by converting solar energy into electrical energy using the photovoltaic effect. A photovoltaic cell may be referred to as a solar cell. For example, the photovoltaic cell may include at least one of a monocrystalline silicon solar cell, a polycrystalline silicon solar cell, or a thin-film solar cell. For example, the photovoltaic cell may include an amorphous silicon solar cell, a CIGS-based compound thin-film solar cell, a CdTe-based compound thin-film solar cell, a stacked thin-film solar cell, and the like. However, examples of photovoltaic cells are not limited to those described above, and there may be various types of photovoltaic cells.

The MLPE 110 is connected to a photovoltaic module 100 to optimize the output voltage of the photovoltaic module 100. For example, the MLPE 110 may optimize the output voltage so that the output of the photovoltaic module 100 is maximized. For example, a MLPE 110 may increase power generation efficiency by using maximum power point tracking (MPPT) to calculate a voltage value at which the output power can be maximized.

For example, the MLPE 110 may be a direct current (DC) optimizer or a micro-inverter.

For example, in case that the MLPE 110 is a DC optimizer, a single DC optimizer may be connected to a single photovoltaic module 100. Additionally, the photovoltaic module 100 may be connected to an inverter. In this case, the DC optimizer may optimize the power output from the photovoltaic module 100 and output the optimized power output to an inverter (e.g., a string inverter). The current converted by the inverter (e.g., converted from direct current to alternating current) may be output to a load or a power grid.

As another example, in case that the MLPE 110 is a micro-inverter, a single micro-inverter may be connected to a single photovoltaic module 100. In this case, the micro-inverter may convert the power generated from the photovoltaic module 100, and the converted current may be output to a load or a power grid.

For example, a MLPE 110 may be attached to the rear side of the photovoltaic module 100 for use. Additionally, the MLPE 110 may be used in a state physically separated from the photovoltaic module 100. The method of connecting the MLPE 110 and the photovoltaic module 100 is not limited to a specific example and may be implemented in various ways.

For example, the MLPE 110 may be connected to the photovoltaic module 100 in various configurations depending on the structure adopted by the photovoltaic power generation system. For example, the MLPE 110 may be connected one-to-one with each of the photovoltaic cells included in the photovoltaic module 100. As another example, the MLPE 110 may be connected to the photovoltaic cells included in the photovoltaic module 100 in a many-to-one or many-to-many configuration. The connection configuration between the MLPE 110 and the photovoltaic module 100 is not limited to any particular form.

The validation management system 200 is connected to the MLPE 110 and may control the operation of the MLPE 110. For example, the validation management system 200 and the MLPE 110 may be connected via wired or wireless communication, and various wired or wireless communication methods may be applied.

For example, the validation management system 200 may be implemented in an energy management system (EMS), but is not limited thereto. The validation management system 200 may be implemented in the form of a web or an application.

Meanwhile, an installation fault may occur during the process of connecting the MLPE 110 to the photovoltaic module 100. In addition, a component fault such as damage or malfunction of at least one of the various components included in the MLPE 110 may occur. For example, the MLPE 110 may include a voltage converter, a processor, an analog-to-digital converter, a voltage sensor, a current sensor, a gate driver, and the like.

For example, the MLPE 110 may operate in a self-validation mode (SV mode) and a normal mode. The MLPE 110 may perform the self-validation mode to detect a fault. For example, the self-validation mode may be performed under the condition of fault detection. Alternatively, the self-validation mode may be performed in response to a request from a user.

The MLPE 110 may detect a fault even when the MLPE 110 is not in operation. For example, the MLPE 110 may initiate the self-validation mode immediately after being installed on the photovoltaic module. For example, MLPE 110 may initiate the self-validation mode immediately after the photovoltaic module 100 is installed at a solar power plant or a location for photovoltaic power generation (for example, a household).

Additionally, the MLPE 110 may perform the self-validation mode regardless of whether the inverter connected to the MLPE 110 is operating.

For example, when a plurality of MLPEs 110 are included in a photovoltaic power generation system, each of the plurality of MLPEs 110 may detect a fault. Alternatively, a selected MLPE 110 among the plurality of MLPEs 110 may detect a fault.

Hereinafter, the operation of the MLPE 110 and the validation management system 200 will be described in detail with reference to the drawings.

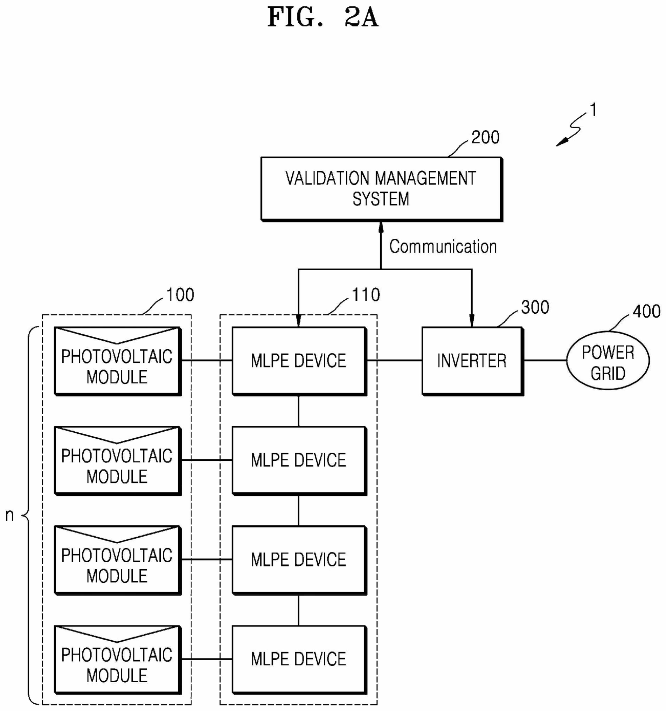

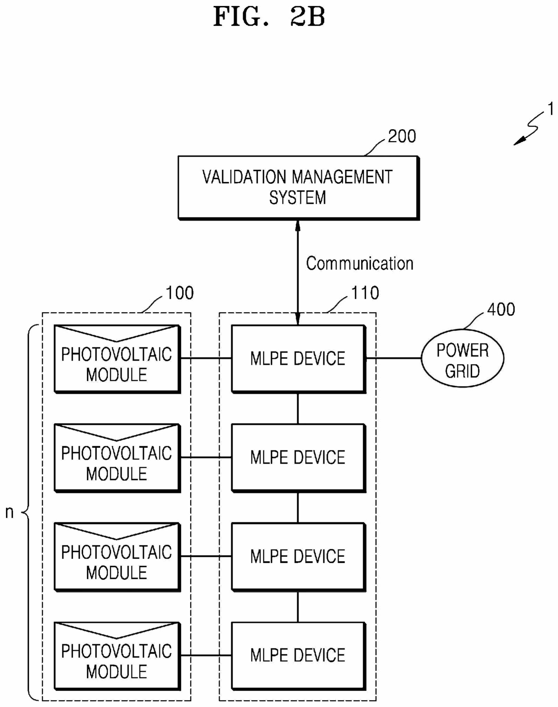

FIGS. 2A and 2B are schematic diagrams illustrating a photovoltaic power generation system according to an embodiment.

Referring to FIG. 2A, a photovoltaic power generation system 1 may include a photovoltaic module 100, an MLPE 110, a validation management system 200, an inverter 300, and a power grid 400. For example, the MLPE 110 shown in FIG. 2A may be a DC optimizer.

The photovoltaic module 100 is a module that produces power using sunlight, and may be provided in plurality in the photovoltaic power generation system 1.

The MLPE 110 may be installed on each photovoltaic module 100. The MLPE 110 may prevent the overall power generation efficiency of the photovoltaic power generation system 1 from decreasing due to shading on a specific photovoltaic module or performance degradation of a specific photovoltaic module.

The outputs of the plurality of MLPEs 110 may be connected in series to form one string. For example, there may be a plurality of strings, and the plurality of strings may be connected to the inverter 300.

The validation management system 200 may receive the status of components of the photovoltaic power generation system 1, such as the MLPE 110, the inverter 300, and the power grid 400. The validation management system 200 may control the operation of the components of the photovoltaic power generation system 1 based on the status of the components of the photovoltaic power generation system 1.

FIG. 2A illustrates an example of the photovoltaic power generation system 1 in which the MLPE 110 is a DC optimizer. However, as described above with reference to FIG. 1, the MLPE 110 may also be a micro-inverter. An example of a photovoltaic power generation system 1 in which the MLPE 110 is a micro-inverter is illustrated in FIG. 2B.

Referring to FIG. 2B, the photovoltaic power generation system 1 may include a photovoltaic module 100, an MLPE 110, a validation management system 200, and a power grid 400.

Compared to FIG. 2A, the photovoltaic power generation system 1 of FIG. 2B may not include the inverter 300. For example, the MLPE 110 may convert power generated from the photovoltaic module 100, and accordingly, the photovoltaic power generation system 1 may not include a separate inverter.

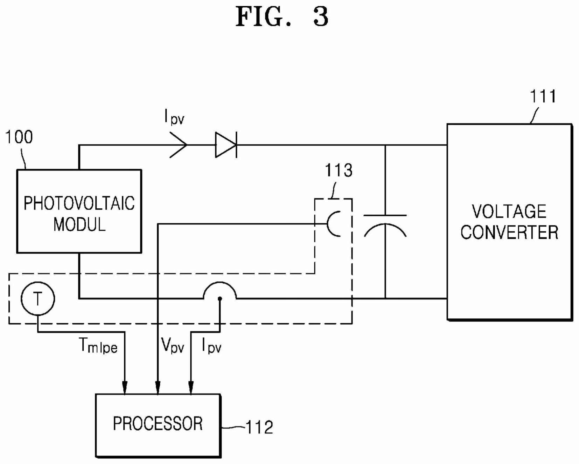

FIG. 3 is a diagram illustrating a connection structure of a photovoltaic module and an MLPE according to an embodiment.

An MLPE 110 may include a voltage converter 111, a processor 112, and a measuring device 113.

The voltage converter 111 is a device that converts the voltage applied from a photovoltaic module 100 (output voltage of the photovoltaic module 100). For example, the voltage converter 111 may include a DC optimizer, a DC/AC inverter, or a micro-inverter.

When the voltage converter 111 is a DC optimizer, it may be implemented as a buck converter that steps down the input voltage. Additionally, the voltage converter 111 may be implemented as a buck-and-boost converter. The detailed structure of the voltage converter 111 is not limited to any particular configuration.

For example, the processor 112 may include a microcontroller unit (MCU) for power control. The processor 112 may execute software such as programs to control at least one other component (e.g., hardware or software component) of the MLPE 110 and may perform various data processing or computations.

For example, the processor 112 may control the duty ratio of the voltage converter 111 to convert (adjust) the output voltage of the MLPE 110. Additionally, the processor 112 may control the operation of internal switch(es) included in the voltage converter 111.

For example, the measuring device 113 may include a voltage sensor, a current sensor, a temperature sensor, and the like.

The processor 112 may receive the output current Ipv of the photovoltaic module 100, the output voltage Vpv of the photovoltaic module 100, and the temperature Tmlpe of the MLPE 110 from the measuring device 113.

Meanwhile, although not shown in FIG. 3, the MLPE 110 may further include a power supply device, a gate driver, and an analog to digital converter (ADC).

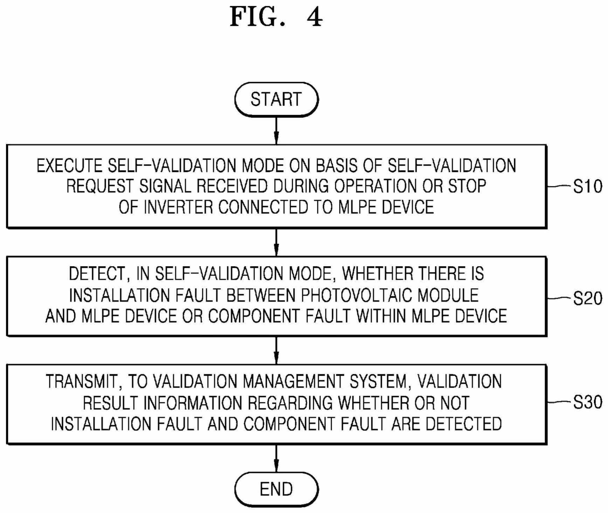

FIG. 4 is an operation flowchart of an MLPE according to an embodiment.

A processor 112 of the MLPE 110 may execute the self-validation mode based on a self-validation request signal received during operation or stop of the inverter 300 connected to the MLPE 110 (S10).

For example, when the MLPE 110 is a DC optimizer, the processor 112 may execute the self-validation mode regardless of whether the inverter 300 is operating. Meanwhile, when the MLPE 110 is a micro-inverter, the photovoltaic power generation system 1 may not include an inverter 300. In this case, the processor 112 may execute the self-validation mode in response to a self-validation request signal.

For example, the processor 112 may receive the self-validation request signal from the validation management system 200 on a basis of a user input requesting self-validation. The processor 112 may execute the self-validation mode upon receiving the self-validation request signal.

In the self-validation mode, the processor 112 may detect whether an installation fault between the photovoltaic module 100 and the MLPE 110 or a component fault within MLPE 110 is present (S20).

If a fault (i.e., an installation fault) occurs during the installation process between the photovoltaic module 100 and the MLPE 110, the current or voltage value at at least one of the output terminal of the photovoltaic module 100, the input terminal of the MLPE 110, or the output terminal of the MLPE 110 may fall outside a predefined range (normal range). Additionally, as the current or voltage value falls outside the normal range, the temperature of the MLPE 110 may also fall outside the normal range.

The processor 112 may detect an installation fault based on fault information (hereinafter referred to as "first fault information") indicating at least one of overvoltage of the photovoltaic module 100, overcurrent of the photovoltaic module 100, overvoltage of the MLPE 110, overcurrent of the MLPE 110, or overheating of the MLPE 110.

For example, the first fault information may be information including bits indicating whether overcurrent, overvoltage, or overheating has occurred. For example, when the photovoltaic modules 100 are configured with three strings, the first fault information for the photovoltaic modules 100 and the MLPEs 110 may be configured as shown in Table 1 below.

**[Table 1]**

| Fault_Flag.union_SW | | | |
|---|---|---|---|
| Internal structural element | | | Description |
| Fault_Flag.union_SW.a II | bit0 | b_Reserved_SW _1 | Reserved bit |
| | bit1 | | |
| | bit2 | b_Vpv_Top | Overvoltage Fault_Vpv Top |
| | bit3 | b_Vpv_Mid | Overvoltage Fault_Vpv Mid |
| | bit4 | b_Vpv_Bot | Overvoltage Fault_Vpv Bot |
| | bit5 | b_Ipv_Top | Overcurrent Fault_Ipv Top |
| | bit6 | b_Ipv_Mid | Overcurrent Fault_Ipv Mid |
| | bit7 | b_Ipv_Bot | Overcurrent Fault_Ipv Bot |
| | bit8 | b_Vout | Overvoltage Fault_Vout |
| | bit9 | b_Iout | Overcurrent Fault_Iout |
| | bit10 | b_Temp_Top | Overheat Fault_Top |
| | bit11 | b_Temp_Mid | Overheat Fault_Mid |
| | bit12 | b_Temp_Bot | Overheating Fault_Bot |
| | bit13 | b_Temp_PLC | Overheat Fault_PLC |
| | bit14 | b_I_Out_Reverse | Reserved bit |
| | bit15 | | |

In the first fault information shown in Table 2, the photovoltaic modules 100 and the MLPEs 110 configured with three strings may be indicated as Top, Mid, and Bot. For example, in the case of bit2, it may correspond to information on the output voltage Vpv of the photovoltaic module located at the top among the photovoltaic modules 100 configured with three strings, and the bit may include information on whether an overvoltage has occurred. In another example, in the case of bit7, it may correspond to information on the output current lpv of the photovoltaic module located at the bottom among the photovoltaic modules 100 configured with three strings, and the bit may include information on whether an overcurrent has occurred. In yet another example, in the case of bit8, it may correspond to information on the output voltage Vout of the MLPE 110, and the bit may include information on whether an overvoltage has occurred.

In addition, the processor 112 may receive measurement information obtained by measuring at least one of the output voltage Vpv of the photovoltaic module 100, the output current Ipv of the photovoltaic module 100, the output voltage Vout of the MLPE 110, the output current lout of the MLPE 110, or the temperature Tmlpe of the MLPE 110.

For example, the output voltage Vpv of the photovoltaic module 100, the output current Ipv of the photovoltaic module 100, and the temperature Tmlpe of the MLPE 110 may be measured by the measuring device 113 of the MLPE 110, as shown above in FIG. 3. However, the present invention is not limited thereto, and the measurement information may be obtained through various routes.

The processor 112 may detect, based on the measurement information, whether there is an installation fault due to at least one of overvoltage, overcurrent, or overheating of the photovoltaic module 100 and the MLPE 110. For example, the processor 112 may check whether the current, voltage, and temperature measurement values indicated in the measurement information fall outside a predefined range.

A fault (i.e., a component fault) occurring in a component included in the MLPE 110 may include not only a rapid shutdown (RSD) operation fault of the MLPE 110, but also a fault occurring in any one of the power conversion device 111, the measuring device 113, the gate driver, the power supply, and the analog-to-digital converter of the MLPE 110.

The processor 112 may detect a component fault based on fault information (hereinafter referred to as "second fault information") indicating at least one of a rapid shutdown operation fault, a voltage sensor fault of the MLPE 110, a current sensor fault of the MLPE 110, a gate driver fault of the MLPE 110, a power supply fault of the MLPE 110, or an analog-to-digital converter fault of the MLPE 110.

For example, the second fault information may be information that includes bits indicating whether each component has a fault. For example, when the photovoltaic modules 100 are configured with three strings, the second fault information for the photovoltaic modules 100 and the MLPEs 110 may be configured as shown in Table 2 below.

**[Table 2]**

| Fault_Flag.union_Mal | | |
|---|---|---|
| Internal structural element | | Description |
| bit0 | b_Reserved_Mal_1 | Reserved bit |
| bit1 | | |
| bit2 | b_RSD_Fault_Flag | RSD operation fault |
| bit3 | b_Buck_Fault_V_To p | Voltage sensor or gate driver Fault_Top |
| bit4 | b_Buck_Fault_V_Mid | Voltage sensor or gate driver Fault_Mid |
| bit5 | b_Buck_Fault_V_Bot | Voltage sensor or gate driver Fault_Bot |
| bit6 | b_Buck_Fault_I_Top | Current sensor or gate driver Fault_Top |
| bit7 | b_Buck_Fault_I_Mid | Current sensor or gate driver Fault_Mid |
| bit8 | b_Buck_Fault_I_Bot | Current sensor or gate driver Fault_Bot |
| bit9 | b_Vdd | 3.3V Fault |
| bit10 | b_Vref | ADC Offset Voltage Fault |
| bit11 | b_Vpv_Short_Top | Input voltage 0V_Top, installation-related or hardware defect-related fault |
| bit12 | b_Vpv_Short_Mid | Input voltage 0V_Mid, installation-related or hardware defect-related fault |
| bit13 | b_Vpv_Short_Bot | Input voltage 0V_Bot, installation-related or hardware defect-related fault |
| bit14 | b_Reserved_Mal_2 | Reserved bit |
| bit15 | | |

In the second fault information shown in Table 1, the photovoltaic modules 100 and the MLPEs 110 configured with three strings may be indicated as Top, Mid, and Bot. For example, in the case of bit3, it corresponds to information on a fault in a voltage sensor or gate driver of the MLPE located at the top among the photovoltaic modules 100 configured with three strings, and the bit may include information on whether a fault has occurred.

In another example, bit9 may indicate the voltage applied to the power supply device of the MLPE 110, and bit 10 may indicate whether the offset voltage of the analog-to-digital converter is being applied at an appropriate voltage.

In yet another example, bit11 may correspond to information on the output voltage (input voltage of the MLPE 110) Vpv of the photovoltaic module located at the top among the photovoltaic modules 100 configured with three strings, and the bit may include information on an installation-related fault or a hardware-related fault.

The processor 112 may transmit validation result information regarding whether an installation fault or component fault is detected to the validation management system 200 (S30).

For example, the validation result information may include information on the occurrence of a detected installation fault or component fault, information regarding the cause of the installation fault or component fault, and information regarding the solution to the installation fault or component fault.

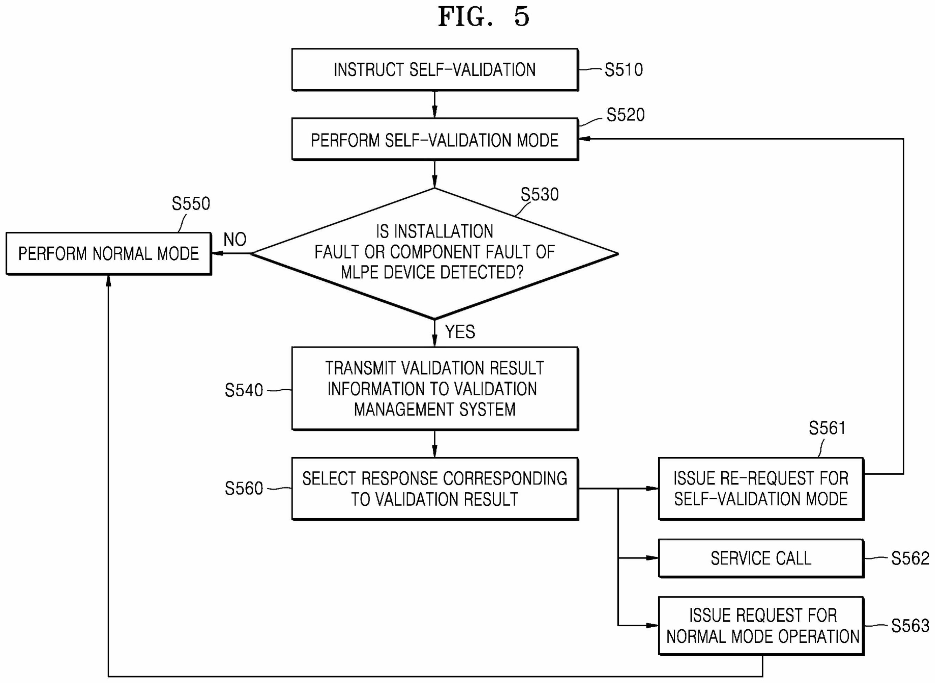

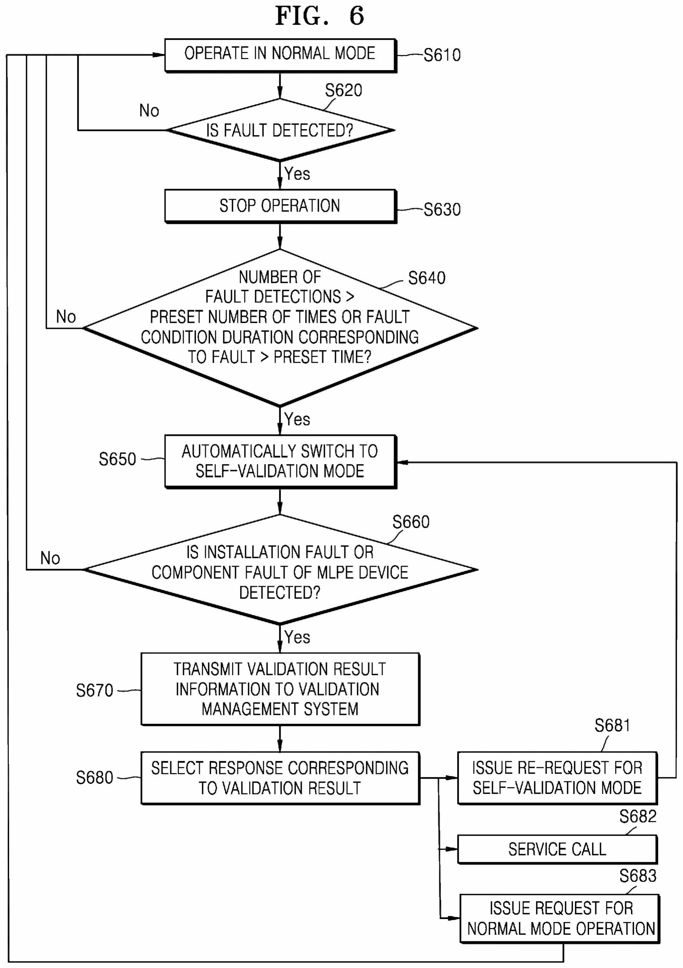

Subsequent response operations of the validation management system 200 will be described with reference to FIGS. 5 and 6.

As described above, by validating whether the MLPE 110 is faulty immediately after the installation of the MLPE, it becomes possible to identify an MLPE that has hardware issues. In addition, it is possible to notify the user whether the MLPE 110 has been properly installed.

Additionally, the user may validate the fault status and installation condition of the MLPE 110 at any time desired.

Moreover, since an MLPE with a hardware or installation issue can be quickly identified, thereby reducing their adverse impact on the overall power generation of the photovoltaic power generation system 1.

FIG. 5 is an operation flowchart of an MLPE and a validation management system according to a first embodiment.

FIG. 5 incorporates the content described above with reference to FIG. 4, and detailed descriptions of content overlapping with FIG. 4 will be omitted.

The MLPE 110 may receive a self-validation request signal (S510). For example, the validation management system 200 may receive a user input requesting self-validation and, in response thereto, transmit a self-validation request signal to the MLPE 110.

Hereinafter, the operation of the validation management system 200 may be performed through the operation of a processor provided in the validation management system 200. Hereinafter, for convenience of explanation, the processor 112 of the MLPE 110 will be referred to as a first processor, and the processor of the validation management system 200 will be referred to as a second processor.

For example, the validation management system 200 may have a separate input unit and display unit to receive user input.

The input unit may include at least one input means. For example, the input unit may include a keyboard, a key pad, a dome switch, a touch panel, a touch key, a mouse, a menu button, and the like.

For example, the display unit may include a liquid crystal display (LCD), a light emitting diode (LED) display, an organic light emitting diode (OLED) display, a micro electro mechanical systems (MEMS) display, and an electronic paper display.

In addition, the validation management system 200 may provide a graphical user interface (GUI) for receiving user input, and the GUI may be provided through a display unit provided through a display unit implemented as a touch screen in combination with the input unit.

The MLPE 110 may perform the self-validation mode (S520) and may detect an installation fault or component fault in the MLPE 110 (S530). When an installation fault or component fault is detected in the MLPE 110 (Yes in S530), the validation result information may be transmitted to the validation management system 200 (S540).

When no installation fault or component fault is detected in the MLPE 110 (No in S530), the MLPE 110 may perform normal operation in the normal mode (S550).

The validation management system 200 may receive the validation result information and perform a preset response operation on the basis of the validation result information (S560).

For example, the predetermined response operation may include an operation of displaying information on the occurrence of the installation fault or component fault on a display, an operation of transmitting a self-validation re-request signal to the MLPE, an operation of executing a service call for inspection of the MLPE, or an operation of transmitting a normal mode operation signal to the MLPE.

The validation management system 200 may display the validation result information on the display, where the validation result information includes information on the occurrence of the installation fault or component fault, information regarding the cause of the fault, or information regarding the solution to the fault.

The validation management system 200 may transmit a self-validation re-request signal to the MLPE 110 based on receiving a user input requesting the self-validation mode again (S561). In this case, the MLPE 110 may re-perform the self-validation mode (S520).

Although not shown in FIG. 5, the second processor of the validation management system 200 may determine, based on the validation result information, whether the self-validation mode needs to be re-performed, and if necessary, transmit a self-validation re-request signal to the MLPE 110.

The validation management system 200 may execute a service call for inspection of the MLPE (S562). The validation management system 200 may execute a service call when, based on the validation result information, it is determined that a separate inspector is needed to resolve the fault information, or upon receiving a user input requesting a service call.

The validation management system 200 may transmit a normal mode operation signal to the MLPE 110 based on receiving a user input requesting operation in the normal mode (S563). In this case, the MLPE 110 may perform the normal mode (S550).

Although not shown in FIG. 5, the second processor of the validation management system 200 may determine, based on the validation result information, whether an operation in the normal mode is necessary, and, if necessary, may transmit a normal mode operation signal to the MLPE 110.

As described above, the user may perform the self-validation mode immediately after installing the MLPE 110, allowing the user to quickly identify and replace a faulty MLPE. At this time, as long as power is supplied to the MLPE 110 and the validation management system 200 can operate the MLPE 110, the self-validation mode may be performed. Accordingly, even if power generation is not being generated by the photovoltaic module 100, the self-validation mode may still be performed immediately after the installation of the MLPE 110.

FIG. 6 is an operation flowchart of an MLPE and a validation management system according to a second embodiment.

FIG. 6 illustrates an example of a process in which a fault detected during an operation in the normal mode of the MLPE 110 is handled.

The MLPE 110 may operate in the normal mode (S610) and may detect a fault (S620).

For example, the first processor may detect an installation fault between the photovoltaic module 100 and the MLPE 110 or a component fault within the MLPE 110 while the MLPE 110 is operating in the normal mode. The fault detection process is the same as that described in relation to S20 of FIG. 3.

When a fault is detected (Yes in S620), the MLPE 110 may stop operation in the normal mode (S630). When no fault is detected (No of S620), the MLPE 110 may continue operation in the normal mode (S610).

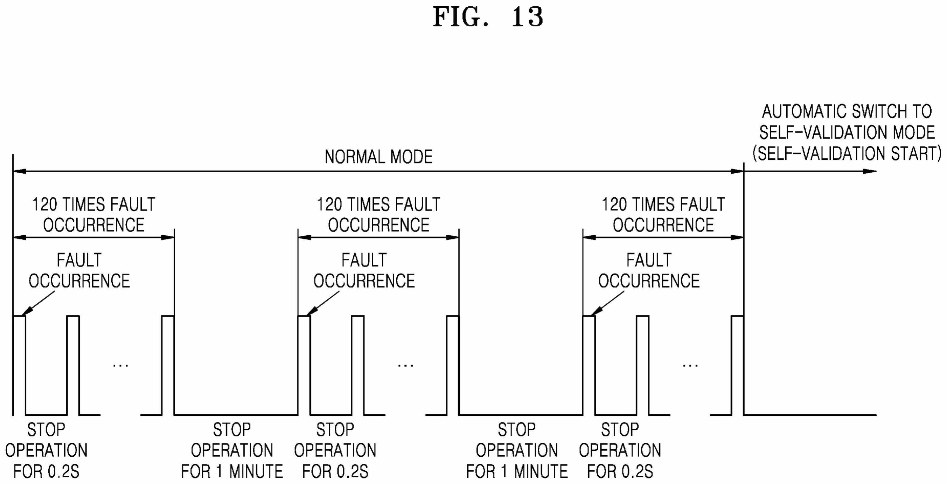

The MLPE 110 may execute the self-validation mode based on the number of detections of the installation fault or component fault exceeding a preset number of times (S640). Alternatively, the MLPE 110 may execute the self-validation mode based on a fault condition duration corresponding to the component fault exceeding a preset time (S640). Specific examples related to S640 are described below with reference to FIGS. 13 to 15.

When the number of detections of an installation fault or component fault exceeds a preset number of times, or when the fault condition duration corresponding to the component fault exceeds a preset time (Yes in S640), the MLPE 110 may automatically switch from the normal mode to the self-validation mode (S650). For example, the MLPE 110 may identify the number of detections of an installation fault or component fault, or the fault condition duration corresponding to the component fault, on the basis of the first fault information and the second fault information.

If the number of detections does not exceed the preset number of times and the fault condition duration corresponding to the component fault does not exceed the preset time (No of S640), the MLPE 110 may continue operation in the normal mode (S610).

The process following the transition of the MLPE 110 to the self-validation mode is the same as the process following S530 of FIG. 5, and thus a description of overlapping content with FIG. 5 will be omitted.

The MLPE 110 may detect an installation fault or component fault of the MLPE in the self-validation mode (S660).

When an installation fault or component fault is detected (Yes in S660), the MLPE 110 may transmit validation result information to the validation management system 200 (S670).

When no installation fault or component fault is detected (No of S660), the MLPE 110 may perform normal operation in the normal mode (S610).

The validation management system 200 may receive the validation result information and perform a preset response operation on the basis of the validation result information (S680).

The validation management system 200 may transmit a self-validation re-request signal to the MLPE 110 based on receiving a user input requesting the self-validation mode again (S681). In this case, the MLPE 110 may re-perform the self-validation mode (S650).

The validation management system 200 may execute a service call for inspection of the MLPE (S682). For example, if a separate inspector is required to resolve the fault information on the basis of the validation result information, or upon receiving a user input requesting a service call, the validation management system 200 may execute a service call.

Based on receiving a user input requesting operation in the normal mode, the validation management system 200 may transmit a normal mode operation signal to the MLPE 110 (S683). In this case, the MLPE 110 may perform the normal mode (S610).

Although not shown in FIG. 6, the second processor of the validation management system 200 may determine, based on the validation result information, whether operation in the normal mode is necessary, and if necessary, may transmit a normal mode operation signal to the MLPE 110.

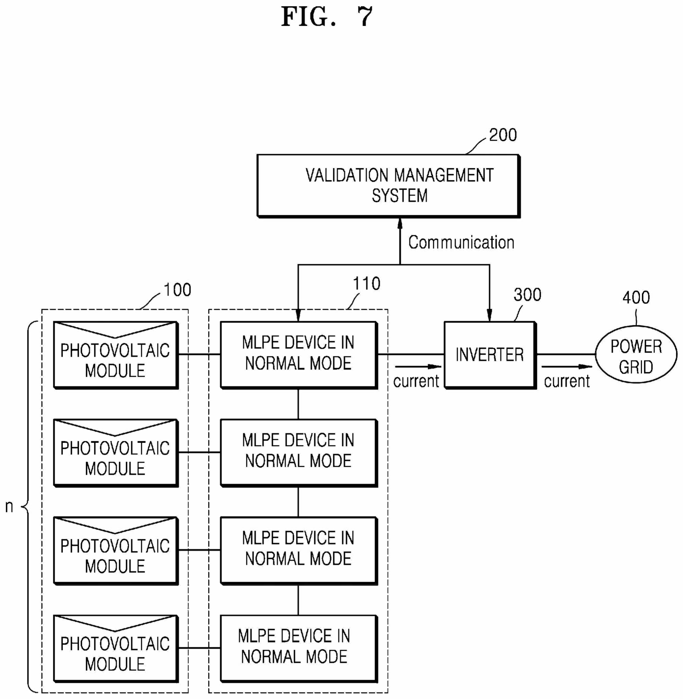

Below, FIGS. 7 to 11 illustrate examples in which the MLPE 110 is a DC optimizer in a photovoltaic power generation system 1. Accordingly, the photovoltaic power generation system 1 may include an inverter 300.

However, when the MLPE 110 is a micro-inverter, the photovoltaic power generation system 1 may not include the inverter 300.

FIG. 7 is a diagram for describing the operation of a photovoltaic power generation system according to the first embodiment.

Referring to FIG. 7, all of the plurality of MLPEs 110 included in the photovoltaic power generation system 1 operate in the normal mode. Additionally, the inverter 300 is in operation and is supplied with current from the plurality of MLPEs 110.

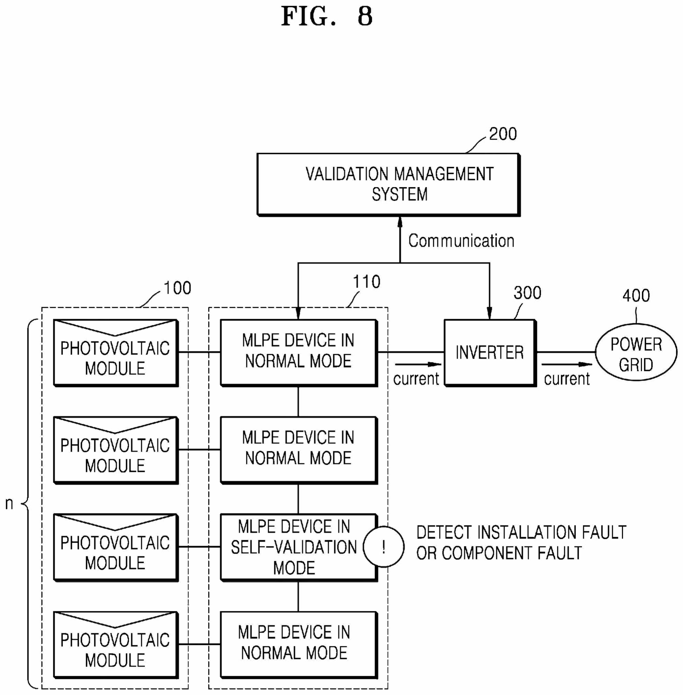

FIG. 8 is a diagram for describing the operation of a photovoltaic power generation system according to the second embodiment.

The plurality of MLPEs 110 included in a photovoltaic power generation system 1 may individually perform the self-validation mode while the inverter 300 is in operation. At this time, the other MLPEs 110 may generate power normally in the normal mode.

As described above, since each MLPE may individually perform the self-validation mode and the other MLPEs may perform power generation normally, efficient power generation can be achieved.

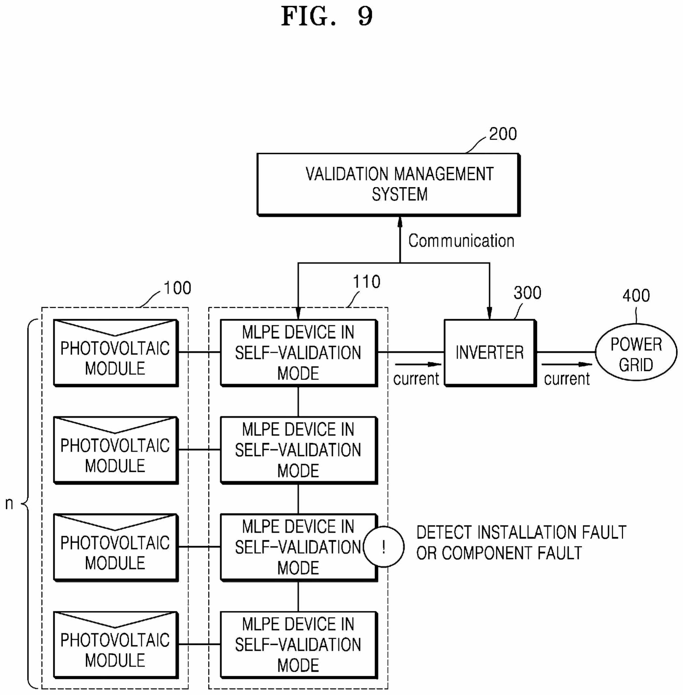

FIG. 9 is a diagram for describing the operation of a photovoltaic power generation system according to a third embodiment.

The plurality of MLPEs 110 included in a photovoltaic power generation system 1 may collectively perform the self-validation mode while the inverter 300 is in operation.

As described above, all of the MLPEs may perform the self-validation mode simultaneously, or may perform the self-validation mode individually.

In addition, by having all of the MLPEs included in the photovoltaic power generation system perform the self-validation mode simultaneously, a faulty MLPE may be quickly identified.

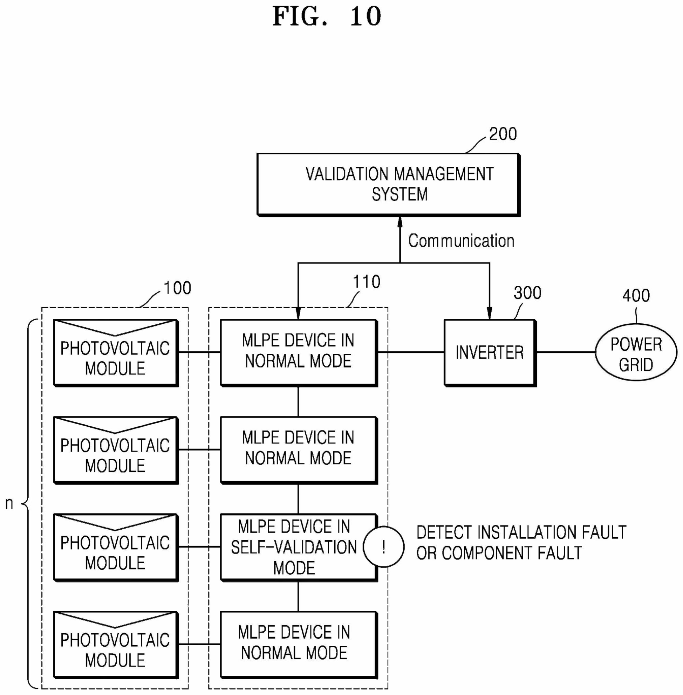

FIG. 10 is a diagram for describing the operation of a photovoltaic power generation system according to a fourth embodiment.

The plurality of MLPEs 110 included in a photovoltaic power generation system 1 may individually perform the self-validation mode while the operation of the inverter 300 is stopped. In this case, the other MLPEs 110 may operate in the normal mode.

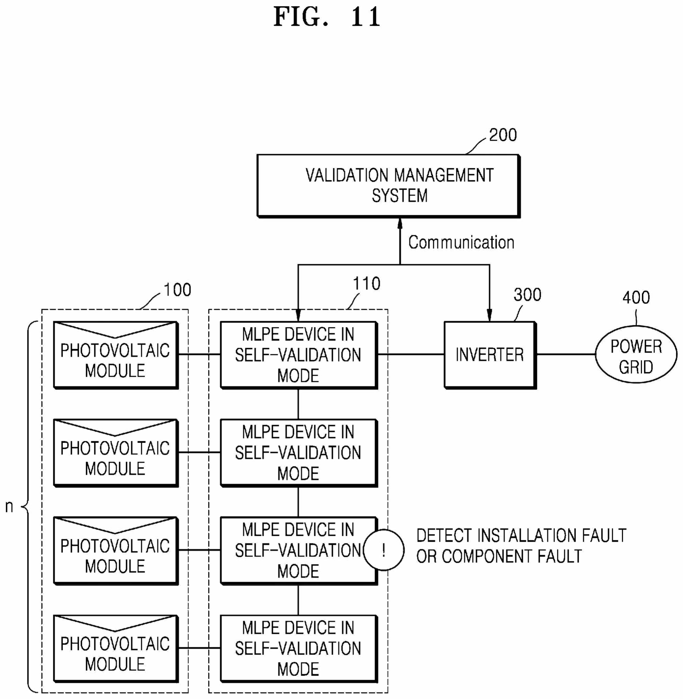

FIG. 11 is a diagram for describing the operation of a photovoltaic power generation system according to a fifth embodiment.

The plurality of MLPEs 110 included in a photovoltaic power generation system 1 may collectively perform the self-validation mode overall while the operation of the inverter 300 is stopped.

As described above, the MLPE may perform the self-validation mode regardless of whether the inverter is in operation.

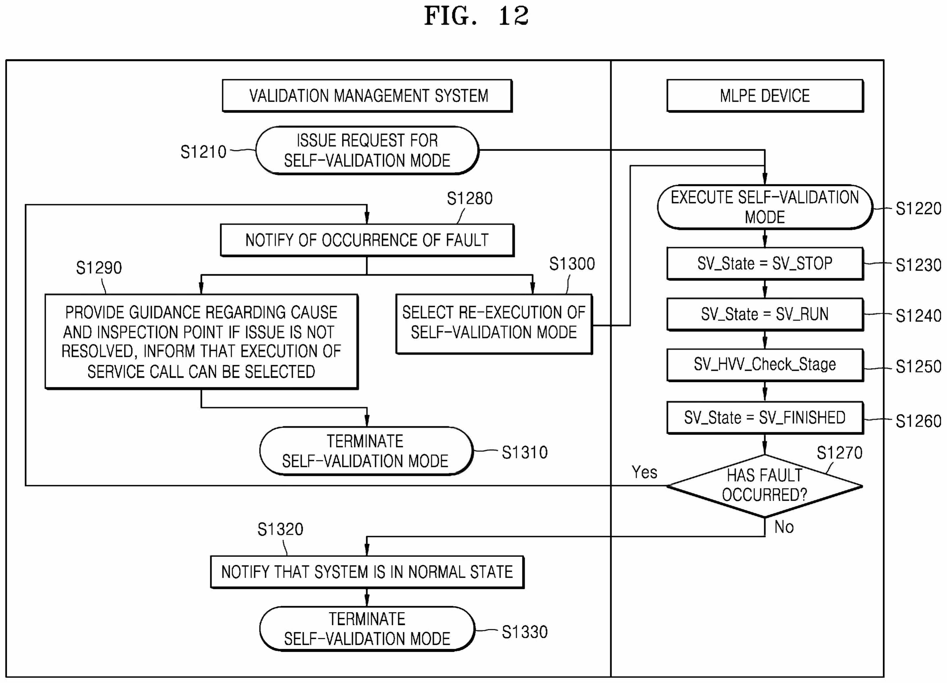

FIG. 12 is an operation flowchart between an MLPE and a validation management system according to an embodiment.

FIG. 12 illustrates an example of the content described above with reference to FIGS. 4 and 5.

Based on a self-validation mode operation request (S1210) from the validation management system 200, the MLPE 110 may perform the self-validation mode (S1220).

The MLPE 110 may change the self-validation state (SV_State) from stop (SV_STOP) to execute (SV_RUN) (S1230-S1240).

The MLPE 110 may determine, in the self-validation mode, whether an installation fault or component fault is present (SV_HW_Check_State) (S1250).

Once the self-validation is completed (SV_FINISHED) (S1260), the MLPE 110 may determine whether a fault has occurred (S1270).

When a fault has occurred (Yes in S1270), the MLPE 110 may transmit validation result information to the validation management system 200, and the validation management system 200 may notify the user of the occurrence of the fault (S1280).

The validation management system 200 may provide guidance regarding the cause of the fault and inspection points, and may inform the user that a service call may be selected if the issue is not resolved (S1290), and may terminate the self-validation mode (S1310).

The validation management system 200 may inform the user that the self-validation mode can be re-executed (S1300). When the validation management system 200 receives a user input requesting re-execution, it may request the MLPE to re-execute the self-validation mode (S1220).

When no fault has occurred (No of S1270), the MLPE 110 may transmit validation result information to the validation management system 200. The validation management system 200 may notify the user that the system is in a normal state (S1320) and may terminate the self-validation mode (S1330).

FIG. 13 is a diagram showing a waveform corresponding to fault detection according to the first embodiment.

FIG. 13 illustrates an example in which, in relation to S640 of FIG. 6, the transition to the self-validation mode is identified based on the number of fault detections during operation in the normal mode.

The MLPE 110 may detect an installation fault between the photovoltaic module 100 and the MLPE 110 or a component fault within the MLPE 110 while operating in the normal mode. For example, the MLPE 110 may detect a fault on the basis of the first fault information as shown in Table 1.

The MLPE 110 may stop for a preset period of time and then restart based on the installation fault or component fault. In this case, the stop time and the number of fault detections are not limited to specific examples and may be determined actively or passively.

Referring to the waveform shown in FIG. 13, the MLPE 110 may stop operation for 0.2 seconds or 1 minute and then restart upon occurrence of a fault during operation in the normal mode. For example, when faults occur in three sets of 120 times each, the MLPE 110 may automatically switch to the self-validation mode and perform self-validation.

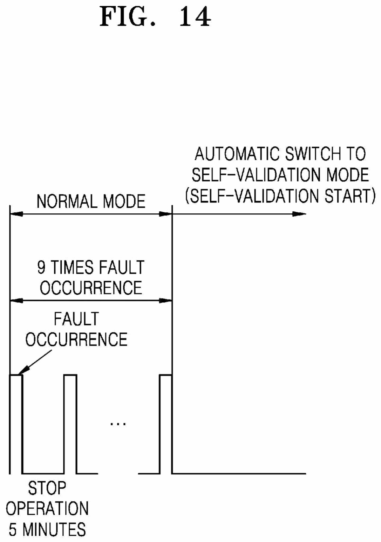

FIG. 14 is a diagram showing a waveform corresponding to fault detection according to the second embodiment.

FIG. 14 illustrates an example in which, in relation to S640 of FIG. 6, the transition to the self-validation mode is identified based on the number of fault detections during operation in the normal mode.

The MLPE 110 may detect a component fault within the MLPE 110 while operating in the normal mode. For example, the MLPE 110 may detect faults corresponding to bits 2 to 10 of the second fault information, as shown in Table 2. The MLPE 110 may stop for a preset period of time and then restart based on the component fault. In this case, the stop time and the number of fault detections are not limited to specific examples and may be determined actively or passively.

Referring to the waveform shown in FIG. 14, the MLPE 110 may stop operation for 5 minutes and then restart upon occurrence of a fault during operation in the normal mode. For example, when a fault occurs 9 times, the MLPE 110 may automatically switch to the self-validation mode and perform self-validation.

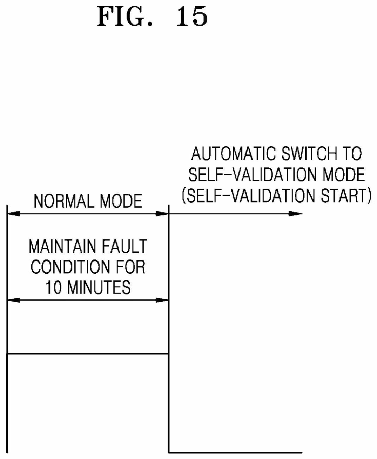

FIG. 15 is a diagram showing a waveform corresponding to fault detection according to the third embodiment.

FIG. 15 illustrates an example in which, in relation to S640 of FIG. 6, the transition to the self-validation mode is identified based on the fault condition duration during operation in the normal mode.

The MLPE 110 may detect a component fault within the MLPE while operating in the normal mode. For example, the MLPE 110 may detect faults corresponding to bits 11 to 13 of the second fault information, as shown in Table 2.

When the MLPE 110 detects a component fault, it may check the fault condition duration corresponding to the component fault.

The MLPE 110 may execute the self-validation mode based on the fault condition duration corresponding to the component fault exceeding a preset time. In this case, the preset time is not limited to a specific example and may be determined actively or passively.

Referring to the waveform shown in FIG. 15, the MLPE 110 may automatically switch to the self-validation mode and perform self-validation when the fault condition duration after the occurrence of the component fault exceeds 10 minutes during operation in the normal mode.

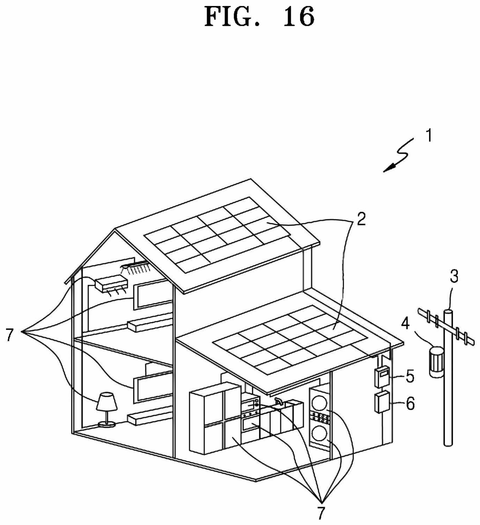

FIG. 16 is a drawing illustrating a power supply structure of a building on which photovoltaic modules are installed according to an embodiment.

Referring to FIG. 16, a plurality of photovoltaic modules 2 may be installed on the roof of a building 1 to generate power. The photovoltaic modules 2 may be connected together to form a photovoltaic module array.

An inverter 6 may convert the power generated from the photovoltaic modules 2 and supply the generated power into the building 1.

Meanwhile, commercial power transmitted through a utility pole 3 may be supplied to the building through a transformer 4.

A plurality of home appliances 7 may selectively receive and operate using at least one of the commercial power or the generated power from the photovoltaic modules 2. A power meter 5 may measure the amount of power consumed in the building 1.

In addition, when a separate energy storage system (ESS) is installed in the building 1, the power generated from the photovoltaic module 2 may be stored in the ESS.

When the plurality of photovoltaic modules 2 are connected, a photovoltaic module array may be configured. For example, the photovoltaic module array may be an assembly of multiple photovoltaic modules and may include a single output terminal.

Meanwhile, the photovoltaic module 2 may include an MLPE 110.

For example, the MLPE 110 may monitor the status or power generation amount of the photovoltaic module 2 and may transmit data to an external device. Additionally, the MLPE 110 may perform emergency shutdown and stop the operation of the photovoltaic module 2 according to the degree of fault in the photovoltaic module 2.

Furthermore, at least one of the photovoltaic module 2 or the MLPE 110 may include a communication module for power line communication.

In addition, the method described above may be written as computer programs and can be implemented in general-use digital computers that execute the programs using a computer readable recording medium. In addition, the structure of the data used in the above-described method may be recorded on a computer-readable recording medium through various means. Examples of the computer readable recording medium include magnetic storage media (e.g., ROM, RAM, USB drives, floppy disks, hard disks, etc.), optical recording media (e.g., CD-ROMs, or DVDs), etc.

One of ordinary skill in the art related to the present embodiments may understand that various changes in form and details may be made therein without departing from the scope of the characteristics described above. Therefore, the disclosed methods should be considered in a descriptive sense only and not for purposes of limitation. The scope of the present invention is defined by the appended claims rather than by the forgoing description, and all differences within the scope of the equivalents thereof should be construed as being included in the present disclosure.

## Claims

1. A module-level power electronics (MLPE), comprising:
a processor configured to execute a self-validation mode on the basis of a self-validation request signal received during operation or stop of an inverter connected to the MLPE, detect, in the self-validation mode, whether there is an installation fault between a photovoltaic module and the MLPE or a component fault within the MLPE, and
transmit, to a validation management system, validation result information regarding whether or not the installation fault and the component fault are detected.

2. The MLPE of claim 1,
wherein the processor is further configured to receive the self-validation request signal from the validation management system based on a user input requesting self-validation.

3. The MLPE of claim 1,
wherein the processor is further configured to detect the installation fault on the basis of first fault information indicating at least one of overvoltage of the photovoltaic module, overcurrent of the photovoltaic module, overvoltage of the MLPE device, overcurrent of the MLPE, or overheating of the MLPE.

4. The MLPE of claim 1,
wherein the processor is further configured to receive measurement information obtained by measuring at least one of an output voltage of the photovoltaic module, an output current of the photovoltaic module, an output voltage of the MLPE device, an output current of the MLPE, or a temperature of the MLPE, and
detect, based on the measurement information, whether there is the installation fault due to at least one of overvoltage, overcurrent, or overheating.

5. The MLPE of claim 3,
wherein the processor is further configured to detect the component fault on the basis of second fault information indicating at least one of a rapid shutdown (RSD) operation fault, a voltage sensor fault of the MLPE, a current sensor fault of the MLPE, a gate driver fault of the MLPE, a power supply fault of the MLPE, or an analog-to-digital converter fault of the MLPE.

6. The MLPE of claim 5,
wherein the processor is further configured to detect the installation fault between the photovoltaic module and the MLPE or the component fault within the MLPE while the MLPE is operating in a normal mode, stop operation of the MLPE based on the installation fault or the component fault, and
execute the self-validation mode based on the number of detections of the installation fault or component fault exceeding a preset number of times.

7. The MLPE of claim 6,
wherein the processor is further configured to operate the MLPE again in the normal mode based on the number of detections not exceeding the preset number of times.

8. The MLPE of claim 5,
wherein the processor is further configured to detect the component fault within the MLPE while the MLPE is operating in a normal mode, and
execute the self-validation mode based on a fault condition duration corresponding to the component fault exceeding a preset time.

9. The MLPE of claim 1,
wherein the validation result information includes information on occurrence of the detected installation fault or component fault, information regarding a cause of the installation fault or component fault, and information regarding a solution to the installation fault or component fault.

10. A validation management system communicating with a module-level power electronics (MLPE) device, the validation management system comprising:
a processor configured to transmit a self-validation request signal to the MLPE based on receiving a user input requesting self-validation,
receive validation result information regarding an installation fault between a photovoltaic module and the MLPE or a component fault within the MLPE in response to the self-validation request signal, and
perform a preset response operation on the basis of the validation result information.

11. The validation management system of claim 10,
wherein the processor is further configured to display, on a display, the validation result information including information on occurrence of an installation fault or component fault, information regarding a cause of a fault, or information regarding a solution to a fault.

12. The validation management system of claim 11,
wherein the preset response operation includes an operation of displaying information on the occurrence of the installation fault or component fault on the display, an operation of transmitting a self-validation re-request signal to the MLPE, an operation of executing a service call for inspection of the MLPE device, or an operation of transmitting a normal mode operation signal to the MLPE.

13. The validation management system of claim 12,
wherein the processor is further configured to transmit a self-validation re-request signal for the self-validation to the MLPE based on receiving a user input requesting the self-validation again according to the validation result information.

14. The validation management system of claim 12,
wherein the processor is further configured to transmit a normal mode operation signal to the MLPE based on receiving a user input requesting operation in a normal mode according to the validation result information.

15. A validation management method performed by a module-level power electronics (MLPE) device, comprising:
executing a self-validation mode on the basis of a self-validation request signal received during operation or stop of an inverter connected to the MLPE,
detecting, in the self-validation mode, whether there is an installation fault between the photovoltaic module and the MLPE or a component fault within the MLPE; and
transmitting, to a validation management system, validation result information regarding whether or not the installation fault and the component fault are detected.

16. The validation management method of claim 15,
wherein the executing comprises
receiving the self-validation request signal from the validation management system based on a user input requesting self-validation.

17. The validation management method of claim 15,
wherein the detecting comprises
detecting the installation fault on the basis of first fault information indicating at least one of overvoltage of the photovoltaic module, overcurrent of the photovoltaic module, overvoltage of the MLPE device, overcurrent of the MLPE, or overheating of the MLPE.

18. The validation management method of claim 17,
wherein the detecting comprises
detecting the component fault on the basis of second fault information indicating at least one of a rapid shutdown (RSD) operation fault, a voltage sensor fault of the MLPE, a gate driver fault of the MLPE, a power supply fault of the processor, or an analog-to-digital converter fault.

19. The validation management method of claim 15, further comprising:
detecting the installation fault between the photovoltaic module and the MLPE or the component fault within the MLPE device while the MLPE is operating in a normal mode;
stopping operation of the MLPE based on the installation fault or the component fault; and
executing the self-validation mode based on the number of detections of the installation fault or component fault exceeding a preset number of times.

20. The validation management method of claim 19, further comprising:
detecting the component fault within the MLPE while the MLPE is operating in the normal mode, and
executing the self-validation mode based on a fault condition duration corresponding to the component fault exceeding a preset time.
